# EUROPEAN PATENT APPLICATION

(11) **EP 1 722 305 A1**
(43) Date of publication of application: **15.11.2006**
(21) Application number: 05291026.2
(22) Date of filing: 12.05.2005
(51) Int. Cl.: G06F 13/38

(54) **Portable device with mass storage memory**

(71) Applicant: Axalto S.A., 92120 Montrouge (FR)
(72) Inventor: Barbe, Serge,c/o Axalto S.A., 92120 Montrouge (FR)
(74) Representative: Cassagne, Philippe M.J.

(57) **Abstract**

A portable object with mass storage memory, comprising:
- a FLASH-type non-volatile re-writable data memory (19),
- a controller (17) connected to control operation of the memory (19), said controller (17) carrying out byte writing/reading operations and block erasing operations,
- a plurality of electrical contacts (15) on an outside surface of the portable object, and
- a SIM function (21) connected to the controller (17), said SIM function (21) being accessible through said electrical contacts (15) and being able to control the memory controller (17) by means of byte writing/reading and block erasing commands (COM), said SIM function receiving instructions (INS) and comprising a file manager to associate a byte writing/reading or a block erasing command (COM) with the received instruction if such an access to the memory (19) is allowed.

## Description

### FIELD OF THE INVENTION

This invention relates generally to the use and structure of portable object with mass storage memory having different mechanical and/or electrical interfaces.

### BACKGROUND OF THE INVENTION

### SIM Card

In particular the present invention concerns a new Subscriber Identity Module (SIM), or SIM Card, with mass storage memory. Said memory is typically flash-type memory..

Existing Subscriber Identity Modules (SIM) are known for example from the specifications published by the European Telecommunications Standards Institute (ETSI). A portion of these specifications appear as GSM 11.11, a version being technical specification ETSI TS 100 977 V8.3.0 (2000-08), entitled "Digital Cellular Telecommunications System (Phase 2+); Specification of the Subscriber Identity Module-Mobile Equipment (SIM-ME) Interface," (GSM 11.11 Version 8.3.0 Release 1999). These specifications are hereby incorporated herein by this reference. Two types of SIM cards are specified: an ID-1 SIM and a Plug-in SIM. In practice, a primary component of each SIM card is a SIM integrated circuit chip.

A SIM card has a format and layout according to the ISO/IEC 7810 and 7816 standards of the International Organization for Standardization (ISO) and the International Electrotechnical Commission (IEC). The ISO/IEC 7810 standard is entitled "Identification cards-Physical characteristics," second edition, August 1995. These standards, copies of which are available from the ISO/IEC in Geneva, Switzerland, are expressly incorporated herein by this reference. The ID-1 SIM card is generally the size of a credit card, having dimensions of 85.60 mm. by 53.98 mm., with rounder corners, and a thickness of 0.76 mm. Such a card may have only memory or may also include a microprocessor, the latter often being referred to as a "Smart Card."

The Plug-in SIM is a very small card. The GSM 11.11 specification calls for this card to be a rectangle 25 mm. by 15 mm., with one corner cut off for orientation, and with the same thickness as the ID-1 SIM card. A primary use of the Plug-in SIM card is in mobile telephones and other portable devices. In both types of cards including the SIM, eight electrical contacts (but with as few as five being used) are specified in the ISO/IEC 7816 standard to be arranged on a surface of the card for contact by a host receptacle.

One function of the SIM provides a level of security for the device in which it is used. In a mobile communications device such as a cellular telephone, the device is authenticated by the communications network sending a random number to the device that is processed by a given algorithm, and the result is sent back to the network. The network compares that result with one it calculates itself by use of the same algorithm. If the results match, communication by the device over the network is enabled. A subscriber authentication key is stored in the SIM for use in this and other security algorithms. The SIM can also operate to control and support various operations of the device in which it is removably installed.

Typically, three types of non-volatile memory are used for the storage of data in such portable devices. There are the so-called ROM, EEPROM and Flash memories.

Masked ROM is the only memory that cannot be programmed after silicon manufacturing. So the program code for masked ROM must be completed before the masked ROM memory can be manufactured. The program code is converted into a binary representation in an mask, and then transferred into each silicon wafer when the wafer is fabricated. A silicon wafer may consist of hundreds to thousands of identical chips.
No electrical current is used to erase or write masked ROM because masked ROM cannot be changed after silicon production. Little current is used to read the state of the masked ROM cell, because the memory state is determined by the ability of electrical current to flow or not. Read operations are very fast.

EEPROM is usually manufactured on the same silicon wafer as masked ROM.
EEPROM is used for information that needs to be written after silicon manufacturing, and for information that can be erased. An EEPROM cell usually consists of two transistors, and uses a floating gate transistor to store a binary value. Because an EEPROM cell consists of two transistors, the cell size is larger than masked ROM. Creating the EEPROM in the silicon wafer also requires additional masking processes, which are costly. EEPROM is useful for storing data and new code, but is expensive to manufacture because of the large cell size. Chip costs are strongly related to the amount of EEPROM that is on the chip because the EEPROM cell is so expensive.
EEPROM uses considerable power because of the two transistors that must be operated. Writing and erasing the EEPROM cell uses large electrical currents since these operations involve the transfer of electrons to or from the floating gate material. The write and erase times depend on the page size of the memory, that is, how many separate cells are connected together. Read operations are fast.

For a given storage capacity, flash memory is much smaller than EEPROM, but also uses a floating gate transistor to store a binary value. Flash memory can be programmed after silicon manufacturing and can be erased. Flash and EEPROM are manufactured in silicon using similar processes and materials. Flash differs from EEPROM by the cell design. Popular Flash cells use a split gate design, which is considerably smaller than EEPROM, and slightly larger than a masked ROM cell. Flash costs less than EEPROM because of the smaller cell size, but may require additional masking processes. Flash memory utilizing a split gate design is similar in size to masked ROM. Current consumption also depends on the Flash memory cell design, but is much lower than EEPROM because of the cell design.
It is very important to mention that Flash memory utilizes different mechanisms for write and erase, where write takes place as a byte operation, and the erase takes place as a block of several bytes. For the management of the basic read and write operations, Flash memory use a so-called controller. The access logic surrounding the Flash memory can be designed to operate as One-Time Programmable (OTP) or byte accessible EEPROM. Writes to Flash memory are very fast, and erase in comparable speeds as EEPROM.

### Memory Cards

Such flash memories have been commercially used as mass storage memory in so-called Memory Cards according to a number of well-known standards. For example, a known Memory Card is the so-called MultiMediaCard™ card. The physical and electrical specifications for the MMC are given in "The MultiMediaCard™ System Specification" that is published by the MultiMediaCard™ Association (MMC-A). Version 3.1 of that Specification, dated June 2001, is incorporated herein by this reference. The MultimediaCard™ card is rectangularly shaped with a size similar to that of a postage stamp. The card's dimensions are 32.0 mm. by 24.0 mm. and 1.4 mm. thick, with a row of electrical contacts on a surface of the card along a narrow edge that also contains a cut-off corner. A modified version of the MultiMediaCard™ is the Secure Digital (SD) card. The SD Card has the same rectangular size as the MMC card but with an increased thickness (2.1 mm.) in order to accommodate an additional memory chip if required. A primary difference between these two cards is the inclusion in the SD card of security functionalities for stored data. Another difference between them is that the SD Card includes additional data contacts in order to enable faster data transfer between the card and a host.

Memory Cards are used with personal computers, cellular telephones, personal digital assistants, digital cameras, portable audio players and other host electronic devices for the storage of large amounts of data.

As is apparent from the foregoing summary of the existing electronic card standards, there are many differences in their physical characteristics including size and shape, in the number, arrangement and structure of electrical contacts and in the electrical interface with a host system through those contacts when the card is inserted into the host card slot.

With reference to FIG.1, patent application WO04/095365 in the name of SANDISK Corp. describes a card comprising a non-volatile re-writable data memory 19, a controller 17 connected to control operation of the memory, a plurality of electrical contacts 13 on an outside surface of the card that are connected with the memory controller 17, and a SIM function 21 connected with the memory controller 17 in a manner to be accessible through outside contacts 15 and to be able to communicate directly with the memory controller 17.

According to this prior art, it is proposed that:
- a host (terminal, etc...) distinct from the card may access the non-volatile re-writable data memory 19 "directly" through electrical contacts 13 and controller 17, and that
- the SIM function can access the data memory 19 through the controller.

A disadvantage of this prior art solution is that the non-volatile re-writable data memory 19 is seen by the host as a non-intelligent mass storage peripheral in which access to the memory is not controlled and/or monitored. In addition this prior art solution raises the problem of fraud and piracy by direct access to the memory through the controller while security remains a key aspect in SIM functionality cards. As a consequence, because some SIM card data objects could not be addressed as non-protected files, the only consistent implementation of such system will be a "compound device" of both an MCC and SIM without any shared resources.

### SUMMARY OF THE INVENTION :

Accordingly, the present invention provides a portable object with mass storage memory, comprising:
- a FLASH-type non-volatile re-writable data memory,
- a controller connected to control operation of the memory, said controller carrying out byte writing/reading operations and block erasing operations,
- a plurality of electrical contacts on an outside surface of the portable object, and
- a SIM function connected to the controller, said SIM function being accessible through said electrical contacts and being able to control the memory controller by means of byte writing/reading and block erasing commands, said SIM function receiving instructions and comprising a file manager to associate a byte writing/reading or a block erasing command with the received instruction if such an access to the memory is granted.

Other aspects, features and advantages of the present invention are included in the following description of representative embodiments, which description should be taken in conjunction with the accompanying drawings.

### BRIEF DESCRIPTION OF THE DRAWINGS :

- FIG. 1 shows one example, in respective physical and logical views, of the SIM function and non-volatile memory combined into a single card according top the prior art; and
- FIG. 2A and 2B FIG. 1 show one example, in respective physical and logical views, of the SIM function and non-volatile memory combined into a single card according to the present invention.

### DESCRIPTION OF PREFERRED EMBODIEMENTS

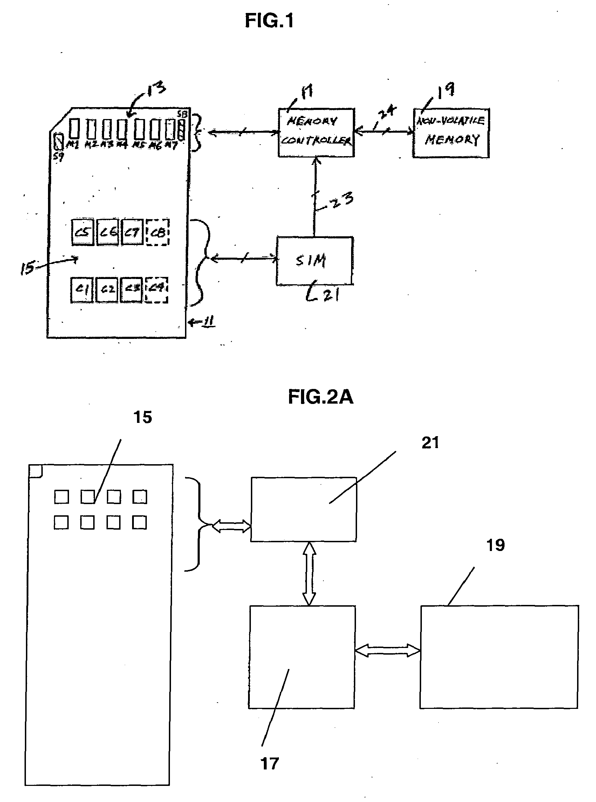

An example card according to the present invention is shown in FIG 2A. It comprises a FLASH-type non-volatile re-writable data memory 19, a controller 17 connected to control operation of the memory 19, a plurality of electrical contacts 15 on an outside surface of the portable object, and a SIM function 21 connected to the controller 17, said SIM function 21 being accessible through said electrical contacts 15 and being able to control the memory controller through byte writing/reading and block erasing commands. The set 15 of contacts, in this specific example, follow for example the ISO/IEC 7816 standard discussed above. The ISO/IEC 7816 standard contemplates the use of eight contacts C1-C8, two contacts C4 and C8 being used according to the present invention to carry out a USB mode as described in both United States patent US-A-6439464 co-owned by the applicant and European patent EP-B-1110173 assigned to the applicant of the present patent application, which contents of both patents are fully incorporated in the present application by reference. Such USB mode enable the card to carry out high speed communication protocols. The eight contacts are connected with a SIM 21 within the card, according for six of these contacts to the GSM 11.11 specification discussed above, which SIM 21 may be a separate integrated circuit chip that is commercially available. Of course, the SIM 21 may alternatively be combined on a single integrated circuit chip with either or both of the controller 17 and memory 19 Other physical size and attributes of the card according to the invention can be used, for example from either the MMC or SD cards, depending upon whether the contacts 13 follow the MMC or SD specifications, respectively. Also, controller 17 and memory 19 may be implemented on separate integrated circuit chips or combined on the same chip.

The technology used in the a FLASH-type non-volatile re-writable data memory 19 will be now described in more details. Flash memory stores information in an array of transistors, called "cells," each of which traditionally stores one bit of information. Newer flash memory devices, sometimes referred to as multi-level cell devices, can store more than 1 bit per cell, by varying the number of electrons placed on the of a cell.

In NOR flash, each cell looks similar to a standard MOSFET transistor, except that it has two gates instead of just one. One gate is the control gate (CG) like in other MOS transistors, but the second is a floating gate (FG) that is insulated all around by an oxide layer. The FG is between the CG and the substrate. Because the FG is isolated by its insulating oxide layer, any electrons placed on it get trapped there and thus store the information. When electrons are on the FG, they modify the electric field coming from the CG, which modifies the threshold voltage (Vt) of the cell. Thus, when the cell is "read" by placing a specific voltage on the CG, electrical current will either flow or not flow, depending on the Vt of the cell, which is controlled by the number of electrons on the FG. This presence or absence of current is sensed and translated into 1's and 0's, reproducing the stored data. In a multi-level cell device, which stores more than 1 bit of information per cell, the amount of current flow will be sensed, rather than simply the presence or absence of current, in order to determine the number of electrons stored on the FG.
A NOR flash cell is programmed (set to a specified data value) by starting up electrons flowing from the source to the drain, then a large voltage placed on the CG provides a strong enough electric field to suck them up onto the FG, a process called hot-electron injection. To erase (reset to all 1's, in preparation for reprogramming) a NOR flash cell, a large voltage differential is placed between the CG and source, which pulls the electrons off through Fowler-Nordheim tunneling, a quantum mechanical tunneling process. Most modern NOR flash memory components are divided into erase segments, usually called either blocks or sectors. All of the memory cells in a block must be erased at the same time. NOR programming, however, can generally be performed one byte or word at a time.
NAND Flash uses tunnel injection for writing and tunnel release for erasing.
NOR flash was the first type to be developed. It has long erase and write times, but has a full address/data (memory) interface that allows random access to any location. This makes it suitable for storage of program code that needs to be infrequently updated, such as a computer's BIOS. Its endurance is 10,000 to 1,000,000 erase cycles. NOR-based flash is the basis of early flash-based removable media; Compact Flash was originally based on it, though later cards moved to the cheaper NAND flash.

NAND flash were developed later on. They have faster erase and write times, higher density, and lower cost per bit than NOR flash, and ten times the endurance. However its I/O interface allows only sequential access to data. This makes it suitable for mass-storage devices such as PC cards and various memory cards, and somewhat less useful for computer memory. Existing NAND-based removable media format comprise MMC and Secure Digital Cards.

In a flash memory, a byte can be read or programmed at a time in a random access fashion. But the granularity for erasing is so-called a block, i.e only a "block" (several bytes) may be erased at a time. Starting with a freshly erased block, any byte within that block can be programmed. However, once a byte has been programmed, it cannot be changed again until the entire block comprising this byte is erased. In other words, flash memory (specifically NOR flash) offers random-access read and programming operations, but cannot offer random-access rewrite or erase operations.

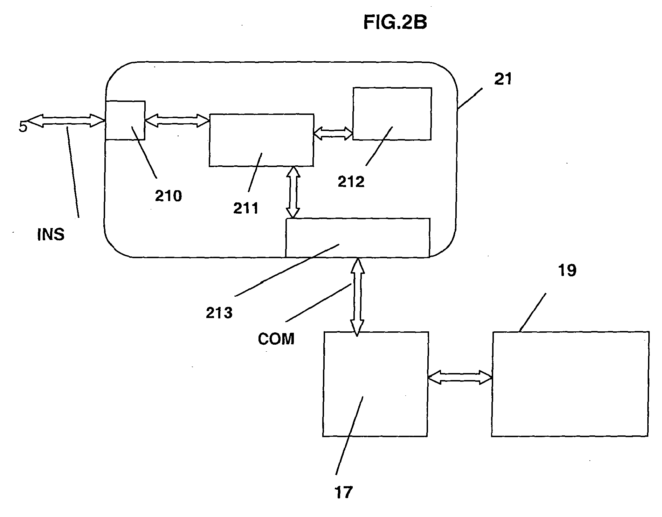

With reference to FIG 2B, SIM function 21, which can use a specific processing unit 211 and an interface 210 through which external instructions are received, comprises at the operating system level typically :
- a file manager 212 that keeps a list of all files in the flash memory 19 and their properties and provides information to allow access to a file by a process;
- a device driver 213 that communicates with the controller 17 of the memory 29 and provides specific commands to the controller 17; and
- a memory manager 212 that coordinates occupation of main memory by different processes and their data and may create virtual memory.

According to the present invention, when an instruction INS is received through contacts 15, the instruction is processed by the SIM function 21. This instruction can be for example a security instruction (authentication, encipherement, etc..), or may be a storage instruction. If it is a storage instruction, a series of several instructions can be used, one of them including reference to a file (existing file, new file) for storage. File manager 212 keeps a list of all existing files in the flash memory 19 and their properties and provides information to allow access to a file. As a first step, the file manager 212 checks if the file can be accessed taking into account some security attributes. If the file can be modified or accessed for example, then the SIM associates a byte writing/reading or a block erasing command COM with the received instruction if such an access (i.e writing, reading or erasing) to the memory 19 is granted.

As a consequence of the present invention, a very significant advantage is obtained because conventional byte reading/writing and block erasing capabilities are used with its known advantages and approved technologies. At the same time, management of the file remains under control of the SIM function which makes possible a high security standard.
It allows also to carry out sharing, repartition, arbitration of access to files in the Flash memory 19 by the SIM function 21. It also allows for the terminal to ignore the way the flash memory is physically and logically formatted . The terminal (or host) only refer to file entities. In the existing prior art, the flash memory portion that is directly accessed by the terminal has to be formatted according to the terminal file system standard, preventing full interoperability which is a key strength of the smart card technology.

Even if the present invention is described for a so-called "SIM function", is can be extended to any "smartcard function", i.e to any existing any smartcard existing technology based on the use of a specific processing unit 211 and an interface 210 through which external instructions are received, which smartcard function comprises at the operating system level typically:
- a file manager;
- a device driver; and
- a memory manager.

The invention provides in the feature according to which the file manager keeps a list of all files in the flash memory 19 and their properties and provides information to allow access to the flash memory through a conventional access, i.e by delivering byte writing/reading and block erasing commands (COM) to control the flash memory.

Although specific examples of the present invention have been described, it will be understood that the invention is entitled to protection within the full scope of the appended claims.

## Claims

1. A portable object with mass storage memory, comprising:
- a FLASH-type non-volatile re-writable data memory (19),
- a controller (17) connected to control operation of the memory (19), said controller (17) carrying out byte writing/reading operations and block erasing operations,
- a plurality of electrical contacts (15) on an outside surface of the portable object, and
- a SIM function (21) connected to the controller (17), said SIM function (21) being accessible through said electrical contacts (15) and being able to control the memory controller (17) by means of byte writing/reading and block erasing commands (COM), said SIM function receiving instructions (INS) and comprising a file manager to associate a byte writing/reading or a block erasing command (COM) with the received instruction if such an access to the memory (19) is allowed.
